(19) Europäisches Patentamt
European Patent Office
Office européen des brevets

(11) Veröffentlichungsnummer : **0 026 868**
**B1**

(12) # EUROPÄISCHE PATENTSCHRIFT

(45) Veröffentlichungstag der Patentschrift : **16.02.83**

(51) Int. Cl.³ : **C 08 G 63/20**

(21) Anmeldenummer : **80105675.5**

(22) Anmeldetag : **20.09.80**

(54) **Aromatische Polyester, Verfahren zu ihrer Herstellung und ihre Verwendung zur Herstellung von Spritzgussartikeln, Folien und Überzügen.**

(30) Priorität : **03.10.79 DE 2940024**

(43) Veröffentlichungstag der Anmeldung : **15.04.81 Patentblatt 81/15**

(45) Bekanntmachung des Hinweises auf die Patenterteilung : **16.02.83 Patentblatt 83/07**

(84) Benannte Vertragsstaaten : **DE FR GB IT NL**

(56) Entgegenhaltungen :
**AT B 228 510**
**DE A 2 122 170**
**DE A 2 842 005**

(73) Patentinhaber : **BAYER AG**
**Zentralbereich Patente, Marken und Lizenzen**
**D-5090 Leverkusen 1, Bayerwerk (DE)**

(72) Erfinder : **Freitag, Dieter, Dr.**
**Hasenheide 10**
**D-4150 Krefeld 1 (DE)**
Erfinder : **Reinking, Klaus, Dr.**
**Robert-Stolz-Strasse 16B**
**D-5632 Wermelskirchen (DE)**
Erfinder : **Idel, Karsten, Dr.**
**Scheibler Strasse 81**
**D-4150 Krefeld (DE)**
Erfinder : **Medem, Harald, Dr.**
**Buschstrasse 167**
**D-4150 Krefeld (DE)**
Erfinder : **Bottenbruch, Ludwig, Dr.**
**Wöhlerstrasse 5**
**D-4150 Krefeld (DE)**

**EP 0 026 868 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

Aromatische Polyester, Verfahren zu ihrer Herstellung und ihre Verwendung zur Herstellung von Spritzgußartikeln, Folien und Überzügen

Die Erfindung betrifft thermoplastische aromatische Polyester, deren Molekulargewicht mit speziellen Kettenabbrechern reguliert worden ist, eine Herstellungsmethode nach dem Phasengrenzflächenverfahren und die Verwendung dieser Polyester zur Herstellung von Spritzgußartikeln, Folien und Überzügen.

Aromatische Polyester sind bekannt (W.M. Eareckson, J. Polym. Sci. XL, 399-406 (1959) ; André Conix, « Thermoplastic Polyesters from Bisphenols », Ind. Eng. Chem., Vol. 51, N° 2, 147-150, Febr. 1959 ; FR 1 177 517, US 3 351 624, DE-AS 14 45 384). Sie werden aufgrund ihrer ausgezeichneten Eigenschaften überall dort eingesetzt, wo hoher Schmelzpunkt und hohe Glasübergangstemperatur, hohe Wärmeformbeständigkeit und gute Schlag- bzw. Kerbschlagzähigkeit, erwünscht sind.

Obwohl die bislang bekannten aromatischen Polyester viele Anforderungen erfüllen, ist die Fachwelt daran interessiert, die Eigenschaften dieser Polyester weiter zu verbessern.

Es wurde nun überraschenderweise gefunden, daß dies durch Verwendung spezieller Verbindungen zur Terminierung der Polyestermoleküle erreicht werden kann.

Gegenstand der Erfindung sind thermoplastische aromatische Polyester auf Basis von Diphenolen, Terephthal- und Isophthalsäurechloriden (Säurechloridverhältnis 7 : 3 bis 3 : 7), Kettenabbrechern und gegebenenfalls Verzweigungsmitteln, wobei die Kettenabbrecher Verbindungen der Formel

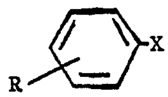

(I)

sind, worin

R in o- und/oder p-Position steht und die Obergrenze des o-Isomerenanteils 20 % beträgt und

X OH, OCOCl oder COCl und

R einen verzweigten Alkylrest bedeuten,

dadurch gekennzeichnet, daß der verzweigte Alkylrest 8 bis 9 C-Atome enthält und im Alkylrest R der Anteil von Methyl-Wasserstoffatomen, bezogen auf sämtliche Wasserstoffatome des Alkylrests R, 47 bis 89 % beträgt.

Weiterer Gegenstand der Erfindung ist ein Verfahren zur Herstellung dieser Polyester nach dem Zweiphasengrenzflächenverfahren, dadurch gekennzeichnet, daß man 0,1 bis 10 Mol-% der Verbindungen I (im Falle von Phenolen bezogen auf Diphenole, im Falle von Säurechloriden und Chlorkohlensäureestern bezogen auf Säuredichloride) — gegebenenfalls in einem Lösungsmittel — gleichzeitig mit den Terephthal- und Isophthalsäuredichloriden oder deren Lösungen in das gerührte Zweiphasengemisch aus alkalischer wäßriger Diphenolatlösung, Katalysatoren und einem Lösungsmittel für den aromatischen Polyester einträgt.

Weiterer Gegenstand der Erfindung ist die Verwendung dieser aromatischen Polyester zur Herstellung von Spritzgußartikeln, Folien und Überzügen.

Bevorzugte Diphenole für die Herstellung der erfindungsgemäßen Polyester sind Verbindungen der Formel

$$HO{-}Z{-}OH \qquad (II)$$

worin Z einen zweiwertigen ein- oder mehrkernigen aromatischen Rest mit 6-30 C-Atomen bedeutet, wobei Z derart gebaut ist, daß die beiden OH-Gruppen direkt an je ein C-Atom eines aromatischen Systems gebunden sind.

Besonders bevorzugte Diphenole sind Verbindungen der Formel

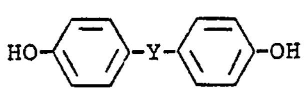

(III)

in der

Y eine Einfachbindung, einen Alkylen- oder Alkylidenrest mit 1-7 C-Atomen, einen Cycloalkylen- oder Cycloalkylidenrest mit 5-12 C-Atomen, —O—, —S—, $-\underset{\underset{O}{\parallel}}{S}-$, —$SO_2$—, oder $-\underset{\underset{O}{\parallel}}{C}-$bedeutet,

sowie deren kernalkylierte und kernhalogenierte Derivate, z. B.

Hydrochinon,
Resorcin,
Dihydroxydiphenyle,
Bis-(hydroxyphenyl)-alkane,

Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfoxide,
Bis-(hydroxyphenyl)-sulfone und
α,α'-Bis-(hydroxyphenyl)-diisopropylbenzole

sowie deren kernalkylierte und kernhalogenierte Verbindungen. Diese und weitere geeignete Diphenole sind z. B. in den US-Patentschriften 3 028 365, 3 275 601, 3 148 172, 3 062 781, 2 991 273, 3 271 367, 2 999 835, 2 970 131 und 2 999 846, in den deutschen Offenlegungsschriften 1 570 703, 2 063 050, 2 063 052, 2 211 956, 2 211 957, der franz. Patentschrift, 1 561 518 und in der Monographie « H. Schnell, Chemistry and Physics of Polycarbonates, Interscience Publishers, New York, 1964 » beschrieben.

Die wichtigsten Diphenole seien nachfolgend namentlich aufgezählt :

Bisphenol A = 2,2-Bis-(4,4-dihydroxy-diphenyl)-propan, Tetramethylbisphenol A, 1,1-Bis-(4-hydroxyphenyl)-isobutan, 1,1-Bis-(4-hydroxyphenyl)-cyclohexan, 4,4-Dihydroxydiphenylsulfid, 4,4-Dihydroxydiphenyl, 4,4-Dihydroxydiphenylsulfon sowie deren di- und tetrahalogenierten Derivate. Besonders bevorzugt ist Bisphenol A. Es können auch beliebige Mischungen der vorgenannten Diphenole verwendet werden.

Zur Herstellung der erfindungsgemäßen aromatischen Polyester werden Gemische aus Terephthalsäuredichlorid und Isophthalsäuredichlorid im Molverhältnis 7 : 3 bis 3 : 7 eingesetzt. Bevorzugt werden Gemische aus Terephthalsäuredichlorid und Isophthalsäuredichlorid im Molverhältnis 1 : 1.

Die als Kettenabbrecher und damit zur Regelung des Molekulargewichtes einzusetzenden Verbindungen der Formel I sind bekannt (vgl. z. B. J. Amer. Chem. Soc. *56*, 1583-1586 (1934)) oder können auf einfache Weise hergestellt werden.

Erfindungsgemäß bevorzugte Verbindungen der Formel (I) sind beispielsweise

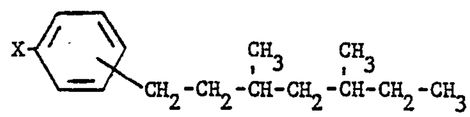

und

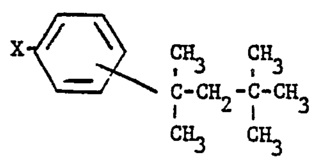

Es können für die Herstellung der erfindungsgemäßen aromatischen Polyester sowohl eine als auch Gemische der Verbindungen eingesetzt werden.

Sie werden in Mengen von 0,1 bis 10 Mol-%, vorzugsweise 0,3 bis 7 Mol-% (im Falle von Phenolen bezogen auf Diphenole, im Falle von Säurechloriden und Chlorkohlenstoffsäureestern bezogen auf Säuredichloride) eingesetzt.

Als Verzweigungsmittel können beispielsweise 3- oder mehrfunktionelle Carbonsäurechloride, wie Trimesinsäuretrichlorid, Cyanursäuretrichlorid, 3,3', 4,4'-Benzophenon-tetracarbonsäuretetrachlorid, 1, 4,5,8-Naphthalintetracarbonsäuretetrachlorid oder Pyromellitsäuretetrachlorid, in Mengen von 0,01 bis 1, 0 Mol-% (bezogen auf eingesetzte Dicarbonsäuredichloride) oder 3- oder mehrfunktionelle Phenole, wie Phloroglucin,
4,6-Dimethyl-2,4,6-tri-(4-hydroxyphenyl)-hepten-2,
4,6-Dimethyl-2,4,6-tri-(4-hydroxyphenyl)-heptan,
1,3,5-Tri-(4-hydroxyphenyl)-benzol,
1,1,1-Tri-(4-hydroxyphenyl)-ethan,
Tri-(4-hydroxyphenyl)-phenylmethan,
2,2-Bis [4,4-bis-(4-hydroxyphenyl)-cyclohexyl]-propan,
2,4-Bis-(4-hydroxyphenyl-isopropyl)-phenol,
Tetra-(4-hydroxyphenyl)-methan,
2,6-Bis-(2-hydroxy-5-methyl-benzyl)-4-methyl-phenyl,
2-(4-Hydroxyphenyl)-2-(2,4-dihydroxyphenyl)-propan,
Tetra-(4-[4-hydroxyphenyl-isopropyl]-phenoxy)-methan,
1,4-Bis-[(4,4«-dihydroxytriphenyl)-methyl]-benzol in Mengen von 0,01 bis 1,0 Mol-% (bezogen auf eingesetzte Diphenole) verwendet werden. Phenolische Verzweigungsmittel können mit den Diphenolen vorgelegt, Säurechlorid-Verzweigungsmittel können zusammen mit den Säuredichloriden eingetragen werden.

Die Herstellung der erfindungsgemäßen aromatischen Polyester kann nach dem Zweiphasengrenzflächenverfahren erfolgen. Hierbei werden die Diphenole in wäßrig-alkalischer Phase gelöst. In diese Lösung können gleichzeitig geringe Mengen, wie beispielsweise 0,1 bis 1,0 Gew.-% (bezogen auf eingesetzte Diphenole), reduzierender alkalischer Substanzen, wie Natriumborhydrid oder Natriumhydrogensulfit, eingetragen werden. Als Katalysatoren für die Polykondensationsreaktion können 0,5 bis 5 Mol-% (bezogen auf eingesetzte Diphenole) quartärer Ammonium- oder Phosphoniumverbindungen in die wäßrig-alkalische Phase eingetragen werden.

Bevorzugte Katalysatoren entsprechen der Formel

$$\begin{array}{c} R^2 \\ | \\ R^1-A^{\oplus}-R^3 \\ | \\ R^4 \end{array} \qquad X^{\ominus} \qquad \text{(IV)}$$

worin

A ein Stickstoff- oder Phosphoratom,

X Chlor oder Brom und

$R^1$, $R^2$, $R^3$, $R^4$ $C_1$-$C_{20}$-Alkyl, $C_6$-$C_{10}$-Cycloalkyl, $C_7$-$C_{30}$-Alkaryl oder -Aralkyl bedeuten und zwei der Reste $R^1$ bis $R^4$ gegebenenfalls verknüpft sind.

Als Lösungsmittel für Verbindungen I, Terephthal-/Isophthalsäuredichloride und aromatischen Polyester können die von der Polycarbonatherstellung bekannten organischen Lösungsmittel, wie Dichlormethan, Chloroform, Tri- und Tetrachlorethylen, Tetrachlorethane, Chlorbenzole, Dichlorbenzole und Gemische dieser Verbindungen eingesetzt werden.

Die Herstellung der erfindungsgemäßen Polyester erfolgt vorzugsweise unter intensivem Rühren bei Temperaturen von 0 bis 40, insbesondere 15 bis 30 °C.

Die gleichzeitige Dosierung der phenolischen Verbindungen I und der Säurechloride — zur Erzielung reproduzierbarer Viskositäten — erfolgt zweckmäßig mit einer Lösung aus den phenolischen Verbindungen I, den Säurechloriden und gegebenenfalls den obengenannten Lösungsmitteln, die in die gerührte Dispersion aus wäßrig-alkalischer Diphenolatlösung und organischem Lösungsmittel eingetragen wird.

In manchen Fällen kann es vorteilhaft sein, Säurechloride und Verbindungen I gleichzeitig, aber getrennt, in die gerührte Dispersion aus wäßrig-alkalischer Diphenolatlösung und organischem Lösungsmittel einzutragen.

Die Isolierung der erfindungsgemäßen aromatischen Polyester kann nach der von der Polycarbonatsynthese nach dem Zweiphasengrenzflächenverfahren bekannten Methode erfolgen

Hierbei wird die organische den Polyester gelöst enthaltende Phase abgetrennt, gewaschen und anschließend der Polyester durch Eindampfen der Lösung isoliert, wobei als Endstufe des Aufarbeitungsprozesses ein Ausdampfextruder benutzt wird.

Die erfindungsgemäßen aromatischen Polyester zeigen im Vergleich zu den üblicherweise, z. B. nach AT-PS 228510 oder DE-OS 2122170, mit Phenol, o-Phenylphenol, p-Phenylphenol, Dimethylphenolen, Kresolen, Halogenphenolen oder p-tert.-Butylphenol als Molekulargewichtregler hergestellten aromatischen Polyestern eine verbesserte Farbzahl, eine wesentlich verbesserte Fließfähigkeit sowie eine erhöhte Wärmeformbeständigkeit bei sonst vergleichbaren mechanischen Eigenschaften.

Die erfindungsgemäßen aromatischen Polyester besitzen in der Regel relative Lösungsviskositäten von 1,18 bis 2,0, insbesondere von 1,2 bis 1,5 (gemessen in 0,5 gew.-%iger Lösung in Dichlormethan bei 25 °C).

Sie können Stabilisatoren, wie beispielsweise Antioxydantien, UV-Stabilisatoren, Fließ- und Entformungshilfsmittel oder andere Additive sowie Füllstoffe wie Glasfasern, Glaskugeln, Asbest- oder Kohlenstofffasern, Kieselgur, Kaolin, Mineralfasern, Gesteinmehl und Pigmente enthalten.

Die nach dem erfindungsgemäßen Herstellungsverfahren erhaltenen aromatischen Polyester werden nach der Extrusion als einheitliches Granulat erhalten und können durch Spritzgiessen zu Formkörpern verarbeitet werden. Sie sind ebenfalls zur Herstellung von Folien und Überzügen geeignet. In den nachfolgenden Beispielen ist die relative Lösungsviskosität $\eta$ rel in Dichlormethan bei 25 °C und einer Konzentration von 0,5 Gew.-% bestimmt worden.

## Beispiele

### Beschreibung der Meßmethode zur Beurteilung der Fließfähigkeit

Auf einer Spritzgußmaschine des Typs SKM 141 (Hersteller : Fa. « Stübbe ») werden unter einem Druck von 1 050 kp/cm$^2$ und bei einer bestimmten Extrusionstemperatur spiralenförmige Streifen mit den Abmessungen 2 mm × 20 mm hergestellt, wobei der Querschnitt des Stangenangusses 10 mm beträgt. Der Zylinder der Spritzgußmaschine hat einen Durchmesser von 40 cm.

Die Länge der resultierenden Fließspirale ist ein Maß für die Fließfähigkeit des extrudierten Polyesters, wobei die Länge der Fließspirale direkt proportional der Fließfähigkeit des Polyesters ist.

## Beschreibung der Methode zur Messung der Farbzahl

### Spektroskopische Farbzahlbestimmung

Granulat des aromatischen Polyesters, dessen Farbzahl bestimmt werden soll, wird in Dichlormethan gelöst (Konzentration 4 g/100 ml). Die verwendeten Küvetten besitzen eine Schichtdicke von 10 cm. Die Messungen werden mit einem Spektrometer des Typs « Cary 219 » der Fa. Cary, USA, ausgeführt.

Vergleichend gegen reines Dichlormethan wird die Lichttransmission I bei einer Wellenlänge von 420 nm und die Lichttransmission $I_0$ bei einer Wellenlänge von 700 nm gemessen. Die Farbzahl des Granulats, gemessen bei 420 nm, errechnet sich nach der Gleichung :

$$FZ_{(420\ nm)} = 11{,}5 \times \log I_0/I$$

### Bestimmung von Kerbschlagzähigkeit und Schlagzähigkeit

Die Prüfung der Kerbschlagzähigkeit $a_k$ nach Charpy und der Schlagzähigkeit $a_k$ nach Charpy erfolgte gemäß DIN 53 453.

### Vergleichsbeispiel 1

In 1,88 kg 45 gew.-%iger Natronlauge und 56 kg destilliertem Wasser werden 2,28 kg Bisphenol A und 6,8 g Natriumborhydrid sowie 37,6 g Phenol (4 Mol-%) unter Stickstoff gelöst. In diese Lösung werden 37, 1 g (1 Mol-%) Triphenyl-ethyl-phosphoniumbromid eingetragen, und anschließend werden 16 kg Dichlormethan sowie 12,89 kg Chlorbenzol zugegeben.

In dieses intensiv gerührte Zweiphasengemisch werden unter Wasserkühlung innerhalb von 5 Minuten bei einer Innentemperatur von 20-25 °C und bei einem pH-Wert von 12 bis 13 eine Lösung von 1 035,3 g Isophthalsäuredichlorid und 1 035,3 g Terephthalsäuredichlorid, gelöst in 3 kg Dichlormethan, eingetragen.

Nach beendeter Zugabe wird 5 Minuten nachgerührt. Anschließend wird die alkalisch-wäßrige Phase abgetrennt, die organische Phase erst mit verdünnter Phosphorsäure und dann mit Wasser gewaschen, bis das Waschwasser eine Leitfähigkeit von 0,1 · $10^{-4}$ S/cm besitzt. Die Isolierung des Polyesters erfolgt durch Eindampfen der Polyesterlösung und Extrudieren mittels eines Vakuumextruders bei 320 °C. Das erhaltene Granulat besitzt eine relative Lösungsviskosität $\eta$ rel von 1,33.

### Vergleichsbeispiel 2

In 1,88 kg 45 gew.-%iger Natronlauge und 56 kg destilliertem Wasser werden 2,28 kg Bisphenol A und 6,8 g Natriumborhydrid unter Stickstoff gelöst.

In diese Lösung werden 37,1 g (1 Mol-%) Triphenylethyl-phosphoniumbromid eingetragen und anschließend werden 16 kg Dichlormethan sowie 12,89 kg Chlorbenzol zugegeben.

In dieses intensiv gerührte Zweiphasengemisch werden unter Wasserkühlung gleichzeitig aus 2 Zuläufen innerhalb von 5 Minuten bei einer Innentemperatur von 20-25 °C und einem pH-Wert von 12 bis 13 im Reaktionsgemisch eine Lösung von

a) 1 035,3 g Isophthalsäuredichlorid und
   1 035,3 g Terephthalsäuredichlorid, gelöst in 3 kg Dichlormethan und
b) eine Lösung von 60,0 g p-tert-Butylphenol (4 Mol-%) in 330 g Dichlormethan

eingetragen.

Nach beendeter Zugabe wird 5 Minuten nachgerührt. Anschließend wird die alkalisch-wäßrige Phase abgetrennt, die organische Phase erst mit verdünnter Phosphorsäure und anschließend mit Wasser gewaschen, bis das Waschwasser eine Leitfähigkeit 0,1 · $10^{-4}$ S/cm erreicht hat.

Die Isolierung des Polyesters erfolgt durch Eindampfen der Polyesterlösung und Extrudieren mittels eines Vakuumextruders bei 320 °C.

Das erhaltene Granulat besitzt eine relative Lösungsviskosität $\eta$ rel von 1,263.

### Beispiel 1 (erfindungsgemäß)

Es wurde ein aromatischer Polyester synthetisiert analog der in Vergleichsbeispiels 2 geschilderten Verfahrensweise, wobei jedoch anstelle der 60,0 g p-tert.-Butylphenol als Kettenabbrecher 82,4 g p-Isooctylphenol (4 Mol-%) eingesetzt werden. Das erhaltene Granulat besaß eine relative Lösungsviskosität $\eta$ rel von 1,267.

Beispiel 2 (erfindungsgemäß)

Es wurde ein aromatischer Polyester synthetisiert analog der in Vergleichsbeispiel 2 geschilderten Verfahrensweise, wobei jedoch anstelle der 60,0 g p-tert.-Butylphenol als Kettenabbrecher 88,0 g Isononylphenol* (4 Mol%) eingesetzt werden. Das erhaltene Granulat besaß eine relative Lösungsviskosität η rel von 1,264.

* 87 % p-Anteil
13 % o-Anteil

Tabellarischer Eigenschaftsvergleich der aromatischen Polyester

| | η rel Granulat | Kerbschlagzähigk. $a_k$ | Schlagzähigk. $a_n$ | Wärmeformbeständigk. n. Vicat B | FZ** | Fließspirale |
|---|---|---|---|---|---|---|
| Vgl. 1 | 1,330 | 19,4 | n. g. * | 181 °C | 19,5 | nich gemessen da rel zu hoch |
| Vgl. 2 | 1,263 | 19,0 | n. g. | 185 °C | 11,4 | 21 cm (350 °C) |
| Beispiel 1 | 1,267 | 22,0 | n. g. | 190 °C | 6,4 | 30 cm (338 °C) |
| Beispiel 2 | 1,264 | 20,0 | n. g. | 190 °C | 6,9 | 31 cm (338 °C) |

* n. g. nicht gebrochen.
** FZ = Farbzahl.

**Ansprüche**

1. Thermoplastische aromatische Polyester auf Basis von Diphenolen, Terephthal- und Isophthalsäure (Säureverhältnis 7 : 3 bis 3 : 7), Kettenabbrechern und gegebenenfalls Verzweigungsmitteln, wobei die Kettenabbrecher Verbindungen der Formel

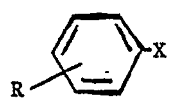

(I)

sind, worin
R in o- und/oder p-Position steht und die Obergrenze des o-Isomerenanteils 20 % beträgt und
X OH, OCOCl oder COCl und
R einen verzweigten Alkylrest bedeuten,
dadurch gekennzeichnet, daß der verzweigte Alkylrest R 8 bis 9 C-Atome enthält und im Alkylrest R der Anteil von Methyl-Wasserstoffatomen, bezogen auf sämtliche Wasserstoffatome des Alkylrests R, 47 bis 89 % beträgt.

2. Polyester nach Anspruch 1, dadurch gekennzeichnet, daß sie eine relative Lösungsviskosität von 1,18 bis 2,0 besitzen.

3. Polyester nach Ansprüchen 1 und 2, dadurch gekennzeichnet, daß sie eine relative Lösungsviskosität von 1,2 bis 1,5 besitzen.

4. Polyester nach Ansprüchen 1-3, dadurch gekennzeichnet, daß die Kettenabbrecher Verbindungen der Formeln

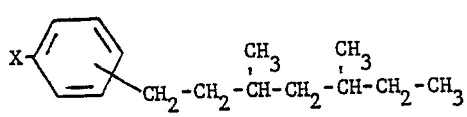

und

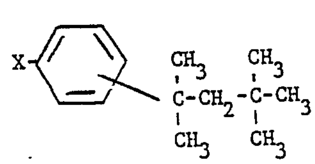

sind.

5. Verfahren zur Herstellung der Polyester nach Ansprüchen 1-4 nach dem Zweiphasengrenz-